# EUROPÄISCHE PATENTSCHRIFT

(11) **EP 0 858 593 B1**
(45) Veröffentlichungstag und Bekanntmachung des Hinweises auf die Patenterteilung: **22.09.1999**
(21) Anmeldenummer: 96934598.2
(22) Anmeldetag: 09.10.1996
(51) Int. Cl.: G01N 21/35, G01N 21/37

(54) **STABILISOTOPEN-ANALYSATOR**
STABLE ISOTOPE ANALYSER
ANALYSEUR D'ISOTOPES STABLES

(30) Priorität: 16.10.1995 DE 19538431
(43) Veröffentlichungstag der Anmeldung: 19.08.1998
(73) Patentinhaber: EMG Elektronik Mechanik Gerätebau GmbH, 28197 Bremen (DE)
(72) Erfinder: SCHÄFER, Frank, D-28197 Bremen (DE); MEIER, Stefan, D-50999 Köln (DE)
(74) Vertreter: Leineweber, Jürgen, Dipl.-Phys.
(86) Internationale Anmeldenummer: EP9604384
(87) Internationale Veröffentlichungsnummer: WO9714952

(56) Entgegenhaltungen:
- EP-A- 0 584 897
- DE-A- 3 932 838

## Beschreibung

Die Erfindung betrifft ein Verfahren zur Konzentrations-Kalibrierung eines Stabilisotopen-Analysators sowie einen Stabilisotopen-Analysator mit Mitteln zur Konzentrations-Kalibrierung.

In vielen Bereichen der Wissenschaft (Archäologie, Biologie, Geologie, Medizin, Physiologie, Pharmakologie usw.) hat die Bestimmung von Isotopenanteilen zunehmende Bedeutung. Dieses gilt vor allem für die Messung des 13CO₂/12CO₂-Verhältnisses im CO₂ des Atemgases, das in der Medizin wertvolle Antworten auf diagnostische Fragestellungen liefert. Stabilisotopen-Analysatoren erlauben die Durchführung von Isotopenanteilsmessungen, z.B. die Bestimmung des selektiven Isotopenanteils (*AₓB_{y}) in einem Meßgas (Aₓ, B_{y}) oder die Bestimmung des Verhältnisses, mit dem die Isotopenanteile vorliegen. Bei der Messung des 13C/12C-Verhältnisses, insbesondere in der Atemgas-Stabilisotopen-Diagnostik, hat sich die Angabe des sogenannten Delta-Wertes durchgesetzt, bei dem ein gemessener Verhältniswert mit einem Standard-Verhältniswert in Relation gesetzt wird.

Aus der EP-A-584 897 ist ein Verfahren zur selektiven Bestimmung eines Isotopenanteiles eines Meßgases mit Hilfe der nichtdispersiven Infrarotspektroskopie bekannt. Die als Ausführungsbeispiel beschriebene Einrichtung dient der Messung des 13CO₂/12CO₂-Verhältnisses. Sie umfaßt zwei Strahlengänge bzw. Meßzellen, von denen die eine der Messung des 13CO₂-Anteils und die andere der Messung des 12CO₂-Anteils dient.

Bei der Durchführung von Isotopenanteilsmessungen hat sich herausgestellt, daß das Ergebnis abhängig ist von der Konzentration, mit der das Meßgas in einem weiteren Gas (z.B. CO₂ in einem Inertgas) oder Gasgemisch (z.B.CO₂ im Mischgas Luft), vorliegt. Um von dieser Abhängigkeit befreite Meßergebnisse zu erzielen, ist es erforderlich, vor der Durchführung von Messungen eine Konzentrationskalibrierung vorzunehmen.

Bei der Einrichtung nach der EP-A-584 897 erfolgt die Kalibrierung der Strahlengänge mit Hilfe von Kalibrierküvetten, die - den Meßküvetten jeweils nachgeordnet - in den jeweiligen Strahlengang einschwenkbar sind. Die Kalibrierküvetten sind mit einem Gemisch aus einem Inertgas und dem zum jeweiligen Strahlengang gehörenden isotopenreinen Meßgasanteil gefüllt. Während der Kalibrierung sind die Meßküvetten von CO₂-freier Luft durchströmt. Um mit einer Einrichtung dieser Art eine Konzentrations-Kalibrierung durchzuführen, ist zunächst die Bereitstellung einer Vielzahl von Kalibrierküvetten mit unterschiedlichen Konzentrationen von isotopenreinen Anteilen des Meßgases in einem Inertgas erforderlich. Diese müssen nacheinander in die Strahlengänge eingeschwenkt und nach der Durchführung von Konzentrationsmessung wieder herausgeschwenkt werden. Aus der Vielzahl der für jeden Strahlengang jeweils erforderlichen Konzentrationseinzelmessungen kann die Abhängigkeit der Isotopenanteilsmessung von der Konzentration im Inertgas bestimmt werden.

Die Konzentrationskalibrierung kann auch ohne das mechanische Einschwenken von entsprechenden Kalibrierküvetten vorgenommen werden. Dabei wird allerdings davon ausgegangen, daß der Verlauf der Signale mit der Konzentration für jeden der beiden Isotopenanteile ähnlich ist und sich bei der Verhältnisbildung keine oder nur zu vernachlässigende Fehler ergeben. In der Praxis hat sich herausgestellt, daß diese Annahme für die zu erzielende Präzision der Messungen gerechtfertigt ist. Für diese Art der Konzentrationskalibrierung muß eine Reihe von Gasmeßproben mit unterschiedlichen und entsprechend fein abgestuften CO₂-Konzentrationen und konstantem Deltawert bereitgestellt und nacheinander gemessen werden.

Der vorliegenden Erfindung liegt die Aufgabe zugrunde, die Konzentrations-Kalibrierung eines Stabilisotpen-Analysators wesentlich zu vereinfachen.

Erfindungsgemäß wird diese Aufgabe durch die kennzeichnenden Merkmale der Patentansprüche gelöst.

Aufgrund der vorgeschlagenen Maßnahmen kann die Herstellung einer-Vielzahl von Meßproben mit unterschiedlichen CO₂-Konzentrationen und konstanten Deltawerten in einem Gasgemisch entfallen. Dieses gilt ebenfalls für die mechanischen Einrichtungen, mit denen die Vielzahl der Meßproben nacheinander in die beiden Strahlengänge eingeschwenkt werden müssen. Es ist lediglich erforderlich, als Meßprobe ein Gasgemisch mit einer relativ hohen CO₂-Konzentration und bekanntem Deltawert herzustellen. Gemeint ist damit, daß die Konzentration des Meßgases im Gasgemisch der Meßprobe an der oberen Grenze des Bereich liegen sollte, in dem die Meßkonzentration üblicherweise liegt.

Wird zur Durchführung der Isotopenanteilsmessungen ein nichtdispersives Infrarotspektrometer mit Meßzellen verwendet, die die selektive Bestimmung von Isotopenanteilen ermöglichen, dann kann das Gerät auch für die zur Kalibrierung notwendige Konzentrationsmessung verwendet werden. Der Ablauf dieser Konzentrationsmessungen ist nahezu identisch mit dem Ablauf der Isotopenanteilsmessungen, so daß das Gerät selbst nur geringfügig modifiziert werden muß, um Konzentrations-Kalibrierungen schnell, sicher und genau durchführen zu können. Es besteht die Möglichkeit der Automatisierung, so daß zur Bedienung des Gerätes speziell geschultes Personal nicht erforderlich ist.

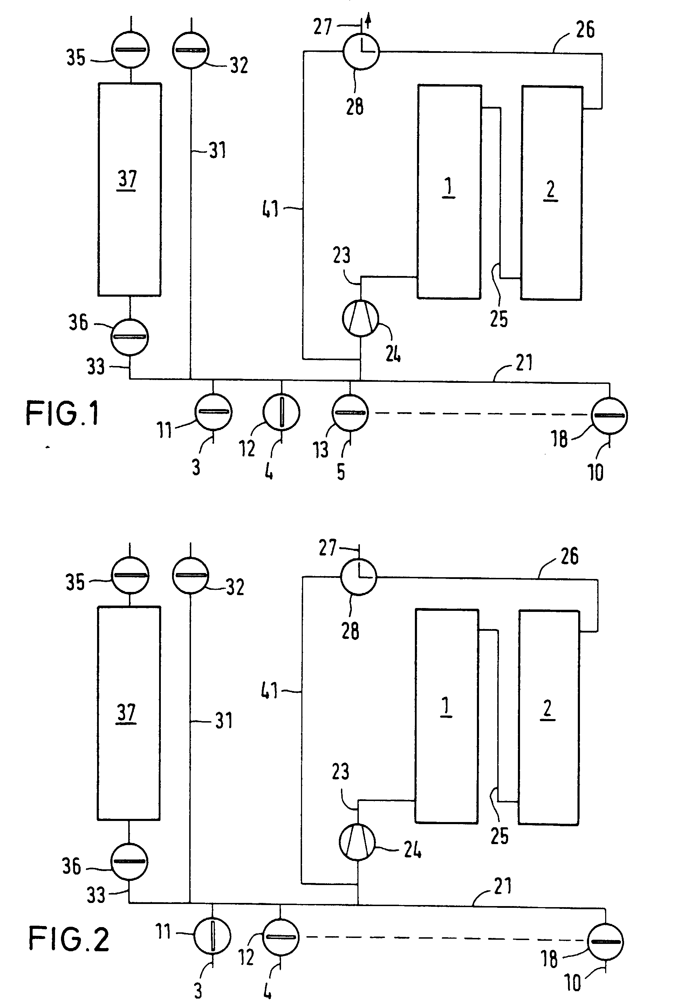

Weitere Vorteile und Einzelheiten der Erfindung sollen anhand von in den Figuren 1 bis 4 dargestellten Ausführungsbeispielen erläutert werden.

Die Figuren zeigen stark schematisch die Gasführung in einem Infrarot-Stabilisotopen-Analysator. Dieser umfaßt zwei Meßzellen 1 und 2 sowie acht Anschlußstutzen 3 bis 10 mit elektromagnetisch betätigbaren Ventilen 11 bis 18. Die Anschlußstutzen münden in eine Leitung 21, die über eine Leitung 23 mit der Förderpumpe 24 mit der ersten Meßzelle 1 in Verbindung steht. Die Meßzellen 1 und 2 sind über den Leitungsabschnitt 25 derart verbunden, daß während der Meßphase das Meßgas nacheinander die Meßzellen durchströmt. An die Meßzelle 2 ist die Leitung 26 angeschlossen, über die das Meßgas zum Auslaß 27 strömt, das beim dargestellten Ausführungsbeispiel von einem 3/2-Wegeventil 28 gebildet wird.

In die Leitung 21 mündet weiterhin eine der Zuführung von Luft dienende Leitung 31 mit dem Ventil 32. Weiterhin kann der Leitung 21 CO₂-freie Luft zugeführt werden. Dazu ist die Leitung 33 mit den Ventilen 35 und 36 sowie einer Kartusche 37 vorgesehen, in welcher sich ein Adsorptionsmittel für CO₂, z.B. Natronkalk, befindet.

Figur 1 zeigt die Stellung der Ventile in einer Meßphase, bei der über den Anschlußstutzen 4 Meßgas einströmt. Bei einer Atemgas-Analyse sind beispielsweise acht Atemgasbeutel an die Anschlußstutzen 3 bis 10 angeschlossen, die nächeinander mit den Meßzellen 1 und 2 verbunden werden. Jeder Messung wird eine Spülzeit vorgeschaltet, in der der gesamte Gasweg mit Luft gespült wird. Die Ventile für die Atemluft-beutel sind geschlossen und nur die "Luft"leitung 31 ist geöffnet. Daran anschließend wird die "Luft"leitung 31 wieder geschlossen und das dem zu messenden Atemluftbeutel vorgeschaltete Ventil 12 geöffnet. Bevor die Messung beginnt, wird während der "Wartezeit" (Dauer etwa 30s) das gesamte Volumen (Leitungen, Meßzellen) mit der Atemluft geflutet. Danach wird unter ständigem Weiterpumpen die Messung durchgeführt. Ist der Beutel gemessen, schaltet das Gerät automatisch - gesteuert von einem Rechner - auf den nächsten Atemluftbeutel um und verfährt entsprechend.

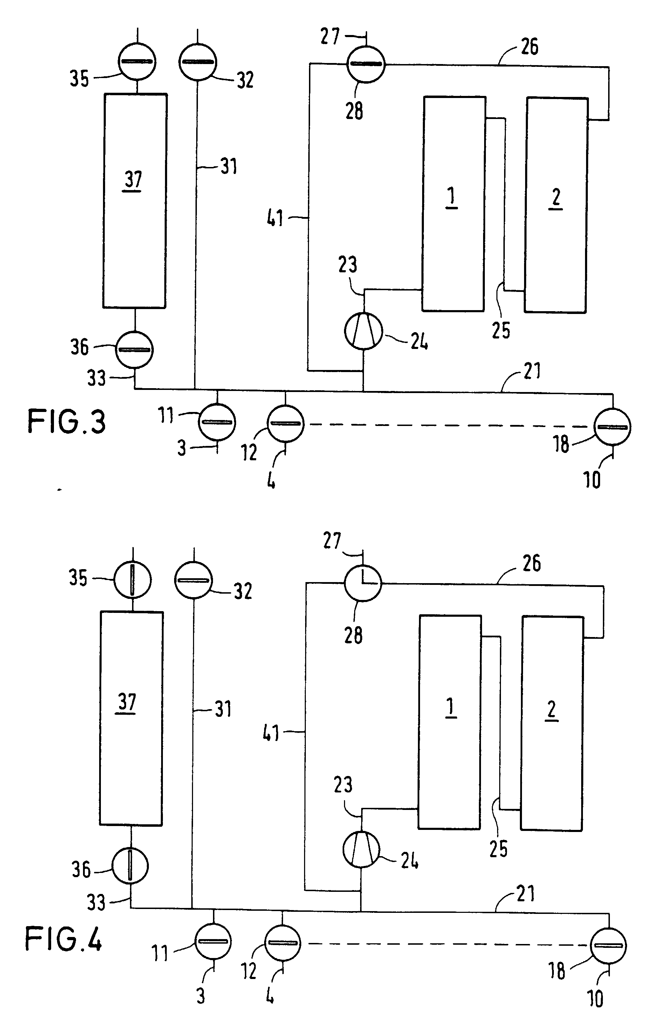

Anhand der Figuren 2 bis 4 soll die Durchführung einer Konzentrations-Kalibrierung bei der Atemgas-Analyse erläutert werden. An den Anschlußstutzen 3 ist ein Atemluft-Beutel angeschlossen, in dem sich Atemluft mit relativ hoher CO₂-Konzentration befindet. Diese Meßprobe kann z.B. dadurch hergestellt werden, daß ein Atemluft-Beutel von einer Person, die kurzzeitig ihren Atem angehalten hat, durch Ausatmen gefüllt wird. Vor der Kalibrierung wird das gesamte Volumen mit CO₂-freier Luft gespült und anschließend das Ventil 11 geöffnet. Nach einer Flutung des gesamten Volumens mit der Atemluft wird das Ventil 11 geschlossen und das Ventil 28 in eine Stellung gebracht, bei der die Atemluft im Kreislauf geführt wird (vgl. Figur 3). Dazu ist der Leitungsabschnitt 41 vorgesehen, der das Ventil 28 mit dem Einlaß der Förderpumpe 24 verbindet. In dieser Phase wird mit Hilfe der Meßzellen 1 und/oder 2 die absolute CO₂-Konzentration gemessen und der Delta-Wert bestimmt. Im Koordinatensystem für die Kalibrierkurve (Delta-Wert gegen die Konzentration) ergibt sich durch diese Messungen ein Punkt. Zur Bestimmung eines weiteren Punktes der Kalibrierkurve wird das im System befindliche Atemgas mit CO₂-freier Luft verdünnt, so daß sich die CO₂-Konzentration erniedrigt. Figur 4 zeigt die während des kurzzeitigen Einlasses CO₂-freier Luft notwendigen Ventilstellungen. Die Ventile 35, 36 sind geöffnet. Durch das Ventil 28 strömt ein Teil des im Kreislauf geführten Gases aus. Danach werden die Ventile wieder in eine der Figur 3 entsprechende Stellung gebracht und die Schritte "Konzentrationsmessung" sowie "Delta-Wert-Messung" wiederholt. Dadurch wird ein weiterer Punkt der Kalibrierkurve gewonnen. Durch weiteres, stufenweises Verdünnen des im System befindlichen Gases und Wiederholung der Messungen ergibt sich die gewünschte Kalibrierkurve. Die Höhe der Konzentrationsänderung wird über ein zeitlich gesteuertes Öffnen der Ventile 35 und 36 eingestellt.

Das dargestellte Gerät erlaubt auch eine Kalibrierung des Nullpunktes. Zweck dieser Kalibrierung ist es, den Meßwert für die CO₂-Konzentration, den das Gerät bei völlig CO₂-freier Luft ausgibt, auf "0" zu setzen. Dazu wird dem Gerät Luft über die Kartusche 37 mit Natronkalk, der das CO₂ chemisch bindet, zugeführt. Die Messung verläuft nach Anforderung automatisch und dauert so lange, bis der gemessene Wert keine Schwankungen mehr zeigt. Das Gerät wird dann per internem Befehl auf "0" gesetzt.

Wesentlich ist jedoch, daß die Erfindung es erlaubt, mit einem nur geringfügig geänderten Stabilisotopen-Analysator eine Konzentrations-Kalibrierung durchzuführen, die einfach, schnell, sicher und genau ist. Wegen der Möglichkeit, den Meß- und auch den Kalibrierablauf zu automatisieren, können die Abläufe von einem Rechner gesteuert werden. Zweckmäßig wird die Kalibrierkurve gespeichert, so daß auch der Vergleich der an weiteren Atemgasproben gemessenen Delta-Werte mit der Kalibrierkurve automatisiert werden kann.

## Patentansprüche

1. Verfahren zur Konzentrations-Kalibrierung eines der Durchführung von Isotopenanteilsmessungen in einem Meßgas dienenden Stabilisotopen-Analysators, wobei das Meßgas Bestandteil eines Gasgemisches ist, das aus dem Meßgas und einem weiteren meßgasfreien Gas oder Mischgas besteht, dadurch gekennzeichnet, daß zunächst ein Gasgemisch mit relativ hoher Meßgaskonzentration und bekannten Isotopenanteilen hergestellt wird und daß zur Bestimmung eines Punktes einer Kalibrierkurve, bei der Isotopenanteilsmeßwerte gegen Konzentrationsmeßwerte aufgetragen sind, die Konzentration des Meßgases im weiteren Gas bestimmt sowie die Isotopenanteilsmessung durchgeführt wird; zur Bestimmung eines weiteren Punktes der Kalibrierkurve wird anschließend die Konzentration des Meßgases im Gasgemisch durch Zufuhr von meßgasfreiem Gas bzw. Mischgas reduziert, die reduzierte Konzentration bestimmt sowie die Isotopenanteilsmessung durchgeführt; zur Bildung der Kalibrierkurve werden die Schritte "Reduzierung der Meßgaskonzentration im Gasgemisch", "Messung der Meßgaskonzentration" sowie "Durchführung der Isotopenanteilsmessung" mehrfach wiederholt.

2. Verfahren nach Anspruch 1, dadurch gekennzeichnet, daß zur Durchführung der Konzentrationsbestimmungen ein im Stabilisotopen-Analysator ohnehin vorhandenes Meßgerät verwendet wird.

3. Verfahren nach Anspruch 1 oder 2, dadurch gekennzeichnet, daß zur Durchführung der Isotopenanteilsmessungen ein nicht-dispersives Infrarot-Spektrometer mit zur selektiven Bestimmung von Isotopenanteilen dienenden Meßzellen (1, 2) verwendet wird und daß die Konzentrationsmessung mit Hilfe der Meßzellen (1) und/oder (2) durchgeführt wird.

4. Verfahren nach Anspruch 3, dadurch gekennzeichnet, daß die Konzentrationsmessung mit Hilfe derjenigen Meßzelle durchgeführt wird, die der Bestimmung des Anteils des überwiegend vorkommenden Isotops dient.

5. Verfahren nach Anspruch 3 oder 4, dadurch gekennzeichnet, daß das Meßgas während der Kalibrierungsmessungen im Kreislauf durch die Meßzellen (1, 2) geführt wird.

6. Verfahren nach einem der vorhergehenden Ansprüche, dadurch gekennzeichnet, daß bei CO₂-Isotopenanteilsmessungen nach der Messung der absoluten Konzentration der Delta-Wert bestimmt wird.

7. Verfahren nach einem der Ansprüche 1 bis 5, dadurch gekennzeichnet, dass bei der Kalibrierung eines der Durchführung von CO₂-Isotopenanteilsmessungen im Atemgas dienenden Analysators die Herstellung des Ausgangs-Gasgemisches mit relativ hoher Meßgaskonzentration dadurch erfolgt, dass ein Atemluft-Beutel von einer Person, die kurzzeitig ihren Atem angehalten hat, durch Ausatmen gefüllt wird.

8. Stabilisotopen-Analysator mit Meßzellen (1,2) zur Durchführung von Isotopenanteilsmessungen und mit einer Förderpumpe (24), dadurch gekennzeichnet, dass die Förderpumpe (24) den Meßzellen (1,2) zwischen Gaseinlaßleitung (21) und der zuerst durchströmten Meßzelle (1) vorgeschaltet ist und dass eine Leitungsverbindung (26,41) zwischen dem Austritt der zuletzt durchströmten Meßzelle (2) und dem Einlaß der Förderpumpe (24) besteht, so dass über die Leitungsverbindung (26,41) das Gasgemisch im Kreislauf geführt werden kann.

9. Analysator nach Anspruch 8, dadurch gekennzeichnet, dass sich in der Leitungsverbindung (26,41) ein 3/2-Wegeventil befindet, das entweder den Austritt der zuletzt durchströmten Meßzelle (2) mit dem Gasauslaß (27) oder mit dem Einlaß der Förderpumpe (24) verbindet.

## Claims

1. Method of concentration-calibrating a stable isotope analyser used for measuring relative fractions of isotopes in a measurement gas. The measurement gas is a component of a gas mixture consisting of the measurement gas and one other gas or mixed gas containing none of the measurement gas. The method is characterised in that first, a gas mixture is produced with a relatively high concentration of measurement gas and known isotope fractions and in that, in order to determine a point on a calibration curve (in which measured isotope fractions are plotted against measured concentration values), the concentration of the measurement gas in the other gas is determined and the isotope fraction measured. To determine a further point on the calibration curve, the concentration of measurement gas in the gas mixture is then reduced by introducing gas or mixed gas containing no measurement gas, the reduced concentration is determined and the isotope fraction measured. To produce the calibration curve, the steps "reduction of the measurement gas concentration in the gas mixture", "measurement of the measurement gas concentration" and "measurement of the isotope fraction" are repeated a number of times.

2. Method as put forth in claim 1, characterised in that a measurement instrument already present in the stable isotope analyser is used for determining the concentration.

3. Method as put forth in claim 1 or 2, characterised in that, for the purpose of measuring relative fractions of isotopes, a non-dispersive infrared spectrometer with measurement cells for the non-selective determination of isotope fractions is also used and that the concentration measurement is conducted using the measurement cells (1) and/or (2).

4. Method as put forth in claim 3, characterised in that the concentration measurement is performed using those measurement cells most closely suited for determining the predominant isotope.

5. Method as put forth in claim 3 or 4, characterised in that the measurement gas is circulated through the measurement cells (1, 2) during calibration measurements.

6. Method as put forth in one of the preceding claims, characterised in that, in the case of measurements of the CO₂ isotope fractions, the delta value is determined after the absolute concentration has been measured.

7. Method as put forth in one of claims 1 to 5, characterised in that during calibration of an analyser for measuring the CO₂ isotope fractions in respiratory gas, the initial gas mixture is prepared with a relatively high measurement gas concentration by allowing a person who has held his breath briefly to exhale into a respiratory air pouch, thereby filling it.

8. Stable isotope analyser with measurement cells (1, 2) for measuring relative fractions of isotopes and provided with a feed pump (24), characterised in that the feed pump (24) is located upstream from the measurement cells (1, 2) between the gas inlet (21) and the first measurement cell through which gas flows (1) and in that a link (26, 41) is provided between the outlet of the last cell through which gas flows (2) and the inlet of the feed pump (24) such that the gas mixture can be circulated via the link (26, 41).

9. Analyser as put forth in claim 8, characterised in that the link (26, 41) contains a 3/2-way valve linking the outlet of the last measurement cell through which gas flows (2) with either the gas outlet (27) or the inlet of the feed pump (24).

## Revendications

1. Procédé pour le calibrage de la concentration d'un analyseur d'isotopes stables servant à réaliser des mesures de la proportion d'isotopes dans un gaz à mesurer, celui-ci étant un composant d'un mélange gazeux constitué du gaz à mesurer et d'un autre gaz exempt de gaz à mesurer ou gaz mixte, caractérisé par le fait qu'un mélange gazeux à concentration de gaz à mesurer relativement forte et avec des proportions d'isotopes connues est fabriqué dans un premier temps et par le fait que pour la détermination d'un point d'une courbe de calibrage pour laquelle des valeurs mesurées de la proportion d'isotopes sont reportées en fonction des valeurs mesurées de la concentration, la concentration du gaz à mesurer dans l'autre gaz est déterminée et la mesure de la proportion d'isotopes est effectuée; pour la détermination d'un autre point de la courbe de calibrage, la concentration du gaz à mesurer dans le mélange gazeux est finalement réduite par apport de gaz exempt de gaz à mesurer ou gaz mixte, la concentration réduite est définie et la mesure de la proportion d'isotopes est réalisée; pour l'établissement de la courbe de calibrage, les étapes «réduction de la concentration du gaz à mesurer dans le mélange gazeux», «mesure de la concentration du gaz à mesurer» ainsi que «réalisation de la mesure de la proportion d'isotopes» sont répétées plusieurs fois.

2. Procédé selon la revendication 1 caractérisé par le fait qu'un instrument de mesure de toute manière présent dans l'analyseur d'isotopes stables est utilisé pour procéder aux déterminations de la concentration.

3. Procédé selon la revendication 1 ou 2 caractérisé par le fait qu'un spectromètre infrarouge non dispersif avec des cellules de mesure (1, 2) servant à la détermination sélective des proportions d'isotopes est utilisé pour la réalisation des mesures de la proportion d'isotopes et que la mesure de la concentration est effectuée à l'aide des cellules de mesure (1) et/ou (2).

4. Procédé selon la revendication 3 caractérisé par le fait que la mesure de la concentration est effectuée à l'aide de la cellule de mesure qui sert à la détermination de la proportion de l'isotope rencontré la plupart du temps.

5. Procédé selon la revendication 3 ou 4 caractérisé par le fait que pendant les mesures de calibrage, le gaz à mesurer est transporté dans le cycle à travers les cellules de mesure (1, 2).

6. Procédé selon l'une des revendications précédentes caractérisé par le fait que pour des mesures de la proportion d'isotopes du CO₂, la valeur delta est déterminée après la mesure de la concentration absolue.

7. Procédé selon l'une des revendications 1 à 5 caractérisé par le fait que pour le calibrage d'un analyseur servant à la réalisation de mesures de la proportion d'isotopes du CO₂ dans le gaz expiré, la fabrication du mélange gazeux de sortie avec une assez grande concentration de gaz mesuré a lieu par remplissage d'un masque respiratoire à ballon avec l'air expiré par une personne qui a retenu son souffle pendant un bref instant.

8. Analyseur d'isotopes stables avec des cellules de mesure (1, 2) pour la réalisation de mesures de la proportion d'isotopes et avec une pompe refoulante (24) caractérisé par le fait que la pompe refoulante (24) est branchée en amont des cellules de mesure (1, 2) entre la conduite d'admission du gaz (21) et la cellule de mesure (1) traversée en premier et qu'il y a une jonction (26, 41) entre la sortie de la cellule de mesure (2) traversée en dernier et l'admission de la pompe refoulante (24) si bien que par l'intermédiaire de la jonction (26, 41), le mélange gazeux peut être transporté dans le cycle.

9. Analyseur selon la revendication 8 caractérisé par le fait que dans la jonction (26, 41), il y a un distributeur 3 orifices/2 positions qui relie la sortie de la cellule de mesure (2) traversée en dernier soit à la sortie de gaz (27), soit à l'admission de la pompe refoulante (24).
